Europäisches Patentamt

European Patent Office

Office européen des brevets

(11) Publication number: **0 123 422**
**A2**

(12) # EUROPEAN PATENT APPLICATION

(21) Application number: **84301900.1**

(22) Date of filing: **21.03.84**

(51) Int. Cl.³: **H 04 N 7/16**

(30) Priority: **28.03.83 GB 8308466**

(43) Date of publication of application:
**31.10.84 Bulletin 84/44**

(84) Designated Contracting States:
**DE FR GB NL**

(71) Applicant: **PLESSEY OVERSEAS LIMITED**
**Vicarage Lane**
**Ilford Essex IGI 4AQ(GB)**

(72) Inventor: **Gooding, John Norman**
**52 Church Road**
**Braunston Daventry Northants(GB)**

(74) Representative: **Fish, Norman Ernest**
**The Plessey Company plc Intellectual Property**
**Department Vicarage Lane**
**Ilford Essex IG1 4AQ(GB)**

(54) Apparatus for scrambling and unscrambling signals.

(57) An apparatus for scrambling raster scan lines of a multiplex analogue component television signal having luminance and chrominance sections in analogue form comprises a writing means (W1), a luminance store (4) and a chrominance store (5), and a reading means (R1). A controlling means (6) controls the writing means (W1) so that the luminance section of the signal is written into the luminance store (4) and the chrominance section is written into the chrominance store (5). The controlling means (6) then controls the reading means (R1) to produce a scrambled signal in which one of the analogue sections is divided into a plurality of information blocks which are separated by at least a part of the other analogue section. An unscrambling apparatus for unscrambling the signal scrambled by the above apparatus comprises a writing means (W3) which is controlled by a controlling means (15) to write the luminance information blocks into a luminance store (17) and the chrominance information into a chrominance store (18). A reading means (R4) is controlled by the controlling means (15) to read out the stores (17, 18) to provide undivided sections of analogue chrominance and luminance information.

EP 0 123 422 A2

FIG.5.

## APPARATUS FOR SCRAMBLING AND UNSCRAMBLING SIGNALS

This invention relates to apparatus for scrambling and unscrambling signals, in particular television signals.

With the advent of multi-channel television such as is proposed by direct broadcast by satellite (DBS) and cable television systems, it is important to prevent the television signals from being received and reproduced by unauthorised persons.

A number of different scrambling techniques have been proposed in the past, the complexity, convenience and cost of implementation of which vary. For example, a previously proposed technique involved line translation in which scrambling is achieved by retiming the video lines in a given raster. This technique has the disadvantage that there is no fixed line synchronisation and hence, decoding apparatus is complex.

Another previously proposed scrambling technique involves line rotation. In this technique there is fixed line synchronisation within a raster. The scrambling is achieved by transmitting a second part of a line of video information before a first part of the line of video information within each raster scan line in the transmission signal for subsequent reversion at the receiver. The disadvantage with this technique is that it is expensive to implement.

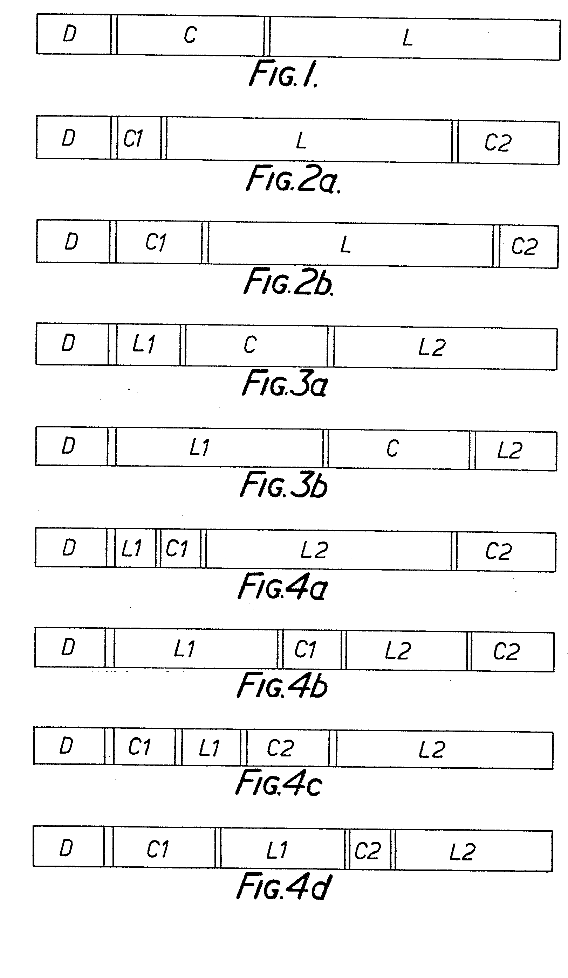

A multiplex analogue component (MAC) system has been selected by the British Home Office for DBS transmissions. In this system, one line of which is shown in Figure 1 of the accompanying drawings, data D (e.g. sound and line synchronisation information among other things) is transmitted in digital form and is followed by a compressed chrominance C section and then a compressed luminance L section transmitted in analogue form. Such a MAC signal can be scrambled according to the line translation or line rotation techniques, but using these techniques is disadvantageous in that complex and expensive unscrambling apparatus is required to unscramble the MAC signal particularly if the signal is to have the high degree of security against unauthorised reception.

The present invention seeks to provide apparatus for scrambling and unscrambling MAC television signals, which apparatus offers a high degree of security in the scrambled signal, and the hardware involved is simple and inexpensive to implement.

According to the present invention, there is provided an apparatus for scrambling a signal having first and second sections of analogue information, the apparatus comprising writing means for writing the first section into a first store and for writing the second section into a second store, reading means for reading out the stores, and controlling means for controlling the writing and the reading out to produce a signal in which at least one of the sections of analogue information is divided into a plurality of information blocks which information blocks are separated by at least a part of the other section of analogue information.

The signal may be a television signal having in each raster scan line a section of digital information in addition to the first and second sections of analogue information.

A sampling means can be provided for sampling the first and second sections of analogue information prior to the first and second sections being written into the first and the second stores.

The apparatus can include a synchronising means provided to receive the television signal, to separate the section of digital information from the first and second sections of analogue information, and to provide a synchronising signal in response to each raster scan line.

The controlling means is arranged to receive the synchronising signal and provides a key signal representative of the division of the at least one section of analogue information.

A key signal encoding means is provided to combine the key signal with the section of digital information to provide an encoded digital signal.

A combining means is provided to combine the encoded digital signal with the analogue information blocks read out from the first and second stores thereby to provide a scrambled television signal.

A second writing means may be provided for writing the sampled first section into a third store and for writing the sampled second section into a fourth store, and a second reading means may be provided for reading out the third and fourth stores. In this case, a directing means is provided which is operative to direct the sampled first and second sections of analogue information to either of the first or second writing means, and a second directing means is provided and is operative to direct the analogue information blocks from either the first or second reading means to the combining means. The second reading means and the second writing means are each controlled by the controlling means.

The first and second directing means are arranged to direct the sampled first and second sections of analogue information of one set of alternate raster scan lines to the first writing means at the same time as the second directing means directs the analogue information blocks of the other set of alternate raster scan lines from the second reading means to the combining means. In this case, the first and second directing means are responsive to the synchronisation signal and are switched in antiphase relative to one another.

According to the present invention, there is further provided an apparatus for unscrambling a signal having first and second sections of analogue information in which at least one of the sections of analogue information is divided into a plurality of information blocks which information blocks are separated by at least a part of the other section of analogue information, the apparatus comprising writing means for writing the information blocks of at least one section of analogue information into a first store and for writing the other section of analogue information into a second store, reading means for reading out the stores, and controlling means for controlling the writing and reading out to produce a signal in which each of the first and second sections of analogue information are undivided.

The signal may be a television signal having a section of digital information in each raster scan line.

This apparatus can have a synchronising means provided to receive the scrambled television signal and to provide a synchronising signal in response to each raster scan line, and to separate the first and second sections of analogue information blocks from the section of digital information.

A key signal decoding means can be provided to decode the section of digital information to provide a key signal representative of the division of information blocks in the scrambled television signal, and to provide a section of digital information representative of, for example, sound.

The controlling means is arranged to control the writing and reading out in response to the synchronising signal and the key signal, thereby to cause undivided first and second sections of analogue information to emerge from the reading means.

A combining means may be provided for combining the section of digital information with the signal read out of the reading means to produce the unscrambled television signal.

A second writing means can be provided for writing the information blocks of the first section of analogue information into a third store and for writing the information blocks of the second section of analogue information into a fourth store. A second reading means is also provided for reading out the third and fourth stores, and directing means is provided to direct the first and second analogue information blocks to either the first writing means or the second writing means, and a second directing means is provided to direct the undivided section of analogue information from either the first reading means or the second reading means.

The first and second directing means responds to the synchronising signal so that the first directing means directs the first and second sections of analogue information blocks of one set of alternate raster scan lines to the first writing means at the same time as the second directing means directs the undivided first and second sections of analogue information of the other set of alternate raster scan lines from the second reading means to the combining means.

As an alternative to the combining means, the undivided analogue sections and the section of digital information which together form the unscrambled television signal, may be passed directly to a television reviewer.

The first and second analogue sections can be chrominance and luminance sections of a multiplex analogue component (MAC) signal.

The first, second, third and fourth stores may be in the form of charged coupled devices, but may also be in the form of digital memories.

The invention will now be further described by way of example with reference to the accompanying drawings in which:

Figure 1 shows a multiplexed analogue component (MAC) television signal comprising a data section D, a chrominance section C, and a luminance section L;

Figures 2a and 2b show a raster scan line of a MAC signal scrambled by apparatus embodying the present invention in which the chrominance C section is divided into two blocks separated by the luminance section L;

Figures 3a and 3b each show a raster scan line of a MAC signal in which the luminance section L is divided into two blocks separated by the chrominance section C;

Figures 4a to 4d each show a raster scan line of a MAC signal in which both the chrominance and the luminance sections are divided into two blocks;

Figure 5 schematically shows an apparatus for scrambling a MAC signal in accordance with the present invention; and

Figure 6 schematically shows an apparatus for descrambling a MAC signal in accordance with the present invention.

Figures 2a and 2b each show a scrambled raster scan line of a MAC signal in which the chrominance information is split in each line into parts C1 and C2. Each line is transmitted in the order data D, C1, L and C2. As can be seen from Figures 2a and 2b, the ratio of the split between C1 and C2 is different in the two lines. The ratio can be varied between some or all of the lines of a raster according to a predetermined or random code.

Figures 3a and 3b each show a line of a MAC signal but in this case the luminance section L rather than the chrominance section C has been split into two parts.

Figures 4a to 4d show lines of a MAC signal in which the chrominance and luminance information are further sub-divided. Clearly, further variations other than the ones shown in Figures 2a to 4d are also possible.

A television picture made up of raster scan lines
scrambled as shown in Figures 2a to 4d is rendered
unviewable because video information is displaced from the
line references.  This results in laterally displaced scene
information in the picture.  If this displacement is varied
from line to line, the picture is severely impaired.  The
fact that some of the luminance information will be received
at a time when the receiver is programmed to receive
chrominance information and vise versa will also cause
severe impairment of the picture.

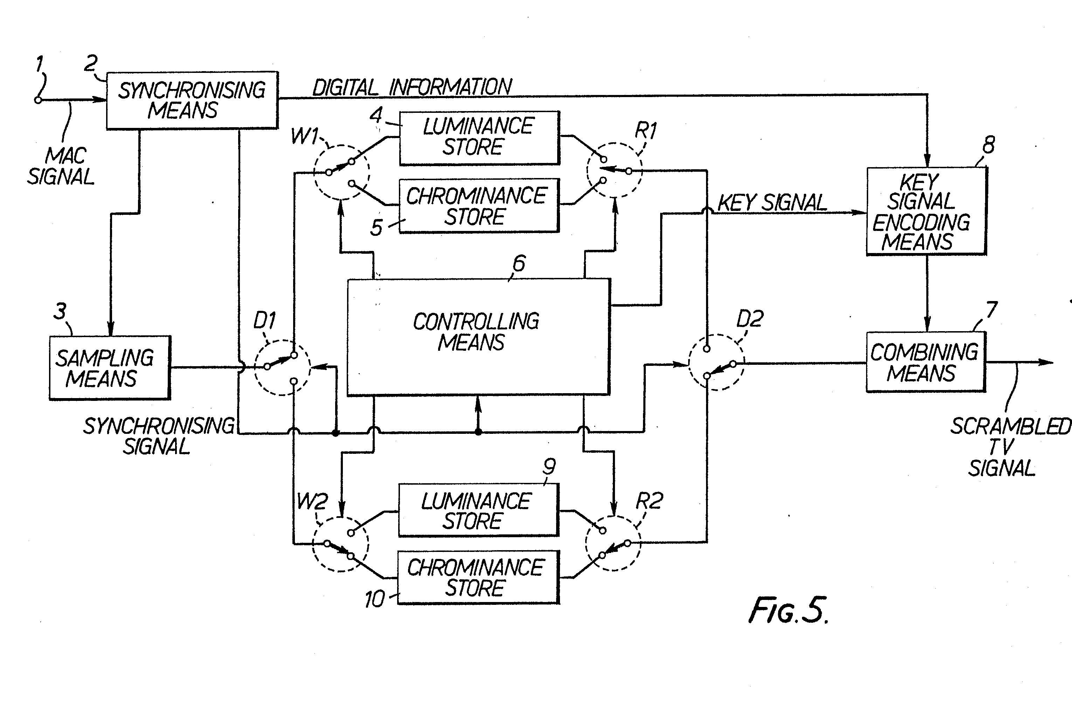

Turning now to Figure 5, there is schematically shown
an apparatus suitable for scrambling a MAC television signal
as shown in any one of Figures 2a to 4d.  The MAC signal is
fed from an input terminal 1 to a sychronising means 2.  The
synchronising means separates a section of digital
information (data D) from the chrominance C and luminance L
sections of analogue information.  The synchronising means 2
also provides a synchronising signal in response to each
raster scan line of the MAC television signal received.  The
chrominance and luminance sections of the analogue
information are supplied to a sampling means 3 which samples
the received analogue sections before feeding them to a
directing means D1.  The directing means D1 is arranged to
direct one set of alternate raster scan lines to a writing
means W1, and to direct the other set of alternate raster
scan lines to a writing means W2, in response to the
synchronising signal.

The writing means W1 is operative to write the sampled luminance section into a luminance store 4 and to write the chrominance section into a chrominance store 5. The stores 4 and 5 are formed from charged coupled devices and each has sufficient capacity to store the respective luminance or chrominance section.

A controlling means 6 is provided to control the writing means W1 so that the luminance section is written in to the luminance store 4 and the chrominance section is written into the chrominance store 5. When the stores 4 and 5 are full, the controlling means 6 controls a reading means R1 to read out a part of the chrominance section C1 stored in the store 5, and subsequently, causes the reading means to read out the luminance section L stored in the store 4 and then to finally read out the remaining chrominance section C2 stored in the chrominance store 5. Therefore, a signal emerges from the reading means R1 which is scrambled in the manner illustrated in Figures 2a and 2b. This signal is fed to a second directing means D2 which is operative to direct the signal to a combining means 7 as the luminance store 4 and the chrominance store 5 are being read out.

The controlling means 6 generates a key signal which is representative of the controlling of the reading out of reading means R1, and this key signal is fed to a key signal encoding means 8. The key signal encoding means 8 encodes the key signal onto the section of digital information which emerges from the synchronising means 2. The key signal encoding means 8 thereby provides an encoded digital signal which is fed to the combining means 7 to be combined with the analogue information blocks directed from the second directing means D2. The output of the combining means 7 is a scrambled television signal as illustrated in Figures 2a and 2b.

The controlling means 6 can be programmed to control the reading out means R1 to switch between the luminance store 4 and the chrominance store 5 any number of times each for a predetermined amount of time so that more complicated scrambling of the analogue information can be effected. For example, as shown in Figure 4a, the reading means R1 is controlled by the controlling means 6 to read out luminance information block L1 from the luminance store 4, to subsequently read out chrominance information block C1 from the chrominance store 5, then to read out luminance information block L2 from the luminance store 4, and finally to read out chrominance information block C2 from the chrominance store 5. Clearly, the ratios of the lengths of the information blocks L1, L2 and C1, C2 can be varied according to the time the respective stores are read out by the reading means R1.

When the reading means R1 is reading out the luminance and chrominance stores 4 an 5, the first directing means D1

directs the sampled analogue sections emerging from the sampling means 3 to the writing means W2. The writing means W2 writes the sampled luminance section into the luminance store 9, and writes the sampled chrominance section into the chrominance store 10. The luminance and chrominance stores 9 and 10 operate in a similar way to the stores 4 and 5 and are read out by a reading means R2. Hence, by switching directing means D1 and D2 in antiphase relative to one another in response to the synchronising signal, one set of alternate raster scan lines for example A,C,E,G,I, etc, pass through the writing means W1 and the reading means R1, and alternate raster scan lines B,D,F,H,J, etc, pass through writing means W2 and reading means R2. The writing means W2 and the read out means R2 are controlled by the controlling means 6 which operates in a similar manner as described with reference to writing means W1 and reading means R1.

The apparatus described above has the advantage that the stores 4,5, and 9,10 can be formed from charged coupled devices which are suitable for storing analogue information therein. Although the above described apparatus uses analogue techniques, digital techniques may be employed, the incoming MAC signal being converted into digital form prior to being scrambled, and being converted to analogue form after being scrambled but before being transmitted.

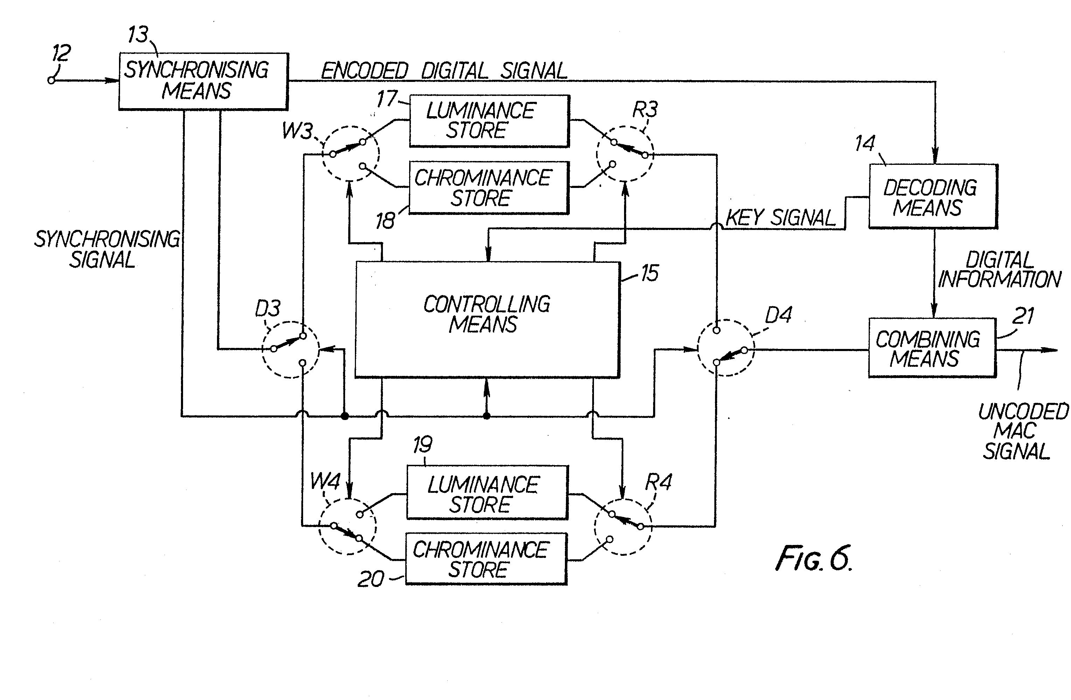

Figure 6 shcematically shows an apparatus for unscrambling a television signal which has been scrambled with apparatus described above with reference to Figure 5.

A scrambled MAC signal is received at a terminal 12 where it is fed to a synchronising means 13. The scrambled MAC signal has in each raster scan line, a section of digital information, and first and second sections of analogue information which are scrambled as described above. The synchronising means 13 divides the incoming scrambled MAC signal to provide three outputs, namely a synchronising signal in response to each raster scan line, a signal of scrambled information blocks which makeup the first and second sections of analogue information, and the encoded digital signal. The scrambled analogue information blocks are fed to a directing means D3 which directs the analogue information blocks of one set of alternate raster scan lines to a writing means W3 and directs the other set of alternate raster scan lines to a writing means W4. The encoded digital signal is decoded by a key signal decoding means 14 which provides a key signal to be fed to a controlling means 15, and provides a decoded digital section of information.

The directing means D3 is responsive to the synchronising signal to direct raster scan lines A,C,E,G,I, etc, to the writing means W3 and raster scan lines B,D,F,H, etc, to the writing means W4. The sychronising signal is also fed to the controlling means 15 which also receives the key signal. Therefore, in response to the key signal and the syncronising signal the controlling means 15 is able to control the writing means W3 to write the scrambled chrominance and luminance analogue information blocks into an appropriate luminance store 17 or chrominance store 18.

Referring to Figure 2a, the writing means W3 receives the analogue information blocks C1, L and C2. The controlling means 15, in response to the sychronising signal and the key signal, controls the writing means W3 to write chrominance information block C1 into the chrominance store 18, then the luminance information block L into the luminance store 17 and finally the chrominance information block C2 into the chrominance store 18.

A similar operation occurs for more complicated scrambled analogue information such as shown in Figures 3a to 4d.

When the luminance and chrominance stores 17 and 18 are full, the directing means D3 directs the following raster scan line analogue information into the writing means W4 and the controlling means 15 controls the writing means W4 to write the luminance information blocks into the luminance store 19 and the chrominance information blocks into the chrominance store 20 in similar manner to that described with reference to stores 17 and 18.

During this time, the reading means R3 reads out the chrominance store 18 and subsequently reads out the luminance store 17 so as to supply an unscrambled analogue signal to a directing means D4. The directing means D4, which is responsive to the synchronising signal, directs the unscrambled analogue signal originating from the writing means R3 or R4 to a combining means 21. The combining means 21 combines the unscrambled analogue signal with the digital information to provide an uncoded MAC signal which is suitable for reception by a television receiver.

It is not essential for the unscrambling apparatus to have the combining means 21 since the unscrambled analogue sections originating from the writing means R3 or R4 and the digital information may be separately passed to a television receiver.

The luminance and chrominance stores 17, 18, 19 and 20, store analogue data and therefore can be formed from charged coupled devices as with the stores 4, 5 and 9, 10. This enables apparatus for scrambling television signals to be more simple and economical in construction.

The controlling means 6 may be programmed to control the writing menas W1 and W2 in a random way, in which case, the key signal must be sent to the unscrambling apparatus in order for the controlling means 15 to know how to control the writing means W3 and W4 so that the MAC signal can be unscrambled. In this case the number of divisions of chrominance and luminance sections and the ratio of the lengths of the divisions can be varied between one line and the next and between one raster and the next. Hence, the degree of scrambling which can be imposed by apparatus embodying the present invention is very large.

Alternatively, the scrambling may be effected by the controlling means 6 according to a predetermined and fixed code. In this case, the controlling means 15 of the unscrambling apparatus can be pre-programmed to control the writing means W3 and W4 according to the predetermined code thereby enabling it to unscramble MAC signals scrambled in accordance with that code. Clearly, it is not essential for a key signal to be transmitted with the scrambled MAC signals.

It should be understood that the writing means W1, W2 and W3, W4 are schematically represented as switches in Figures 5 and 6. In practice, selective writing into the desired store could be controlled by clocking pulses derived from respective controlling means 6 or 15.

Although the apparatus described above involves the scrambling of television signals, the apparatus could be used in other information distribution systems where controlled access is required.

0123422

-17-

CLAIMS:

1. An apparatus for scrambling a signal having first and second sections of analogue information, the apparatus comprising writing means for writing the first section into a first store and for writing the second section into a second store, reading means for reading out the stores, and controlling means for controlling the writing and the reading out to produce a signal in which at least one of the sections of analogue information is divided into a plurality of information blocks which information blocks are separated by at least a part of the other section of analogue information.

2. An apparatus according to claim 1 wherein the signal is a television signal having in each a raster scan line a section of digital information in addition to the first and second sections of analogue information.

3. An apparatus according to claim 1 or claim 2, wherein a sampling means is provided for sampling the first and second sections of analogue information prior to the first and second sections being written into the first and the second stores.

4. An apparatus according to claim 2 or claim 3, wherein a synchronising means is provided to receive the television signal, to separate the section of digital information from the first and second sections of analogue information, and to provide a synchronising signal in response to each raster scan line.

5. An apparatus according to claim 4, wherein the controlling means is arranged to receive the synchronising signal and to provide a key signal representative of the division of the at least one section of analogue information.

6. An apparatus according to claim 5, wherein a key signal encoding means is provided to combine the key signal with the section of digital information to provide an encoded digital signal.

7. An apparatus according to claim 6, wherein a combining means is provided to combine the encoded digital signal with the analogue information blocks fed out from the first and second stores thereby to provide a scrambled television signal.

8. An apparatus according to claim 7, wherein a second writing means is provided for writing the sampled first section into a third store and for writing the sampled second section into a fourth store, a second reading means is provided for reading out the third and fourth stores, a directing means is provided which is operative to direct the sampled first and second sections of analogue information to either of the first or second writing means, and a second directing means is provided and is operative to direct the analogue information blocks from either the first or second reading means to the combining means, and the second reading means and the second writing means are each controlled by the controlling means.

9. An apparatus according to claim 8 wherein the first and second directing means are arranged to direct the sampled first and second sections of analogue information of one set of alternate raster scan lines to the first writing means at the same time as the second directing means directs the analogue information blocks of the other set of alternate raster scan lines from the second reading means, the first and second directing means being responsive to the synchronisation signal and being switched in antiphase relative to one another.

10. An apparatus for unscrambling a signal having first and second sections of analogue information sections in which at least one of the sections of analogue information is divided into a plurality of information blocks which information blocks are separated by at least a part of the other section of analogue information, the apparatus comprising writing means for writing the information blocks of at least one section of analogue information into a first store and for writing the other section of analogue information into a second store, reading means for reading out the stores, and controlling means for reading out to produce a signal in which each of the first and second sections of analogue information are undivided.

11. An apparatus according to claim 10, wherein the signal is a television signal having a section of digital information in each raster scan line.

12. An apparatus according to claim 11, wherein a synchronising means is provided to receive the scrambled television signal and to provide a synchronising signal in response to each raster scan line, and to separate the first and the second sections of analogue information blocks from the section of digital information.

13. An apparatus according to claim 12, wherein a key signal decoding means is provided to decode the section of digital information to provide a key signal representative of the division of information blocks in the scrambled television signal, and to provide a section of digital information.

14. An apparatus according to claim 13 wherein a controlling means is arranged to control the writing and reading out in response to the synchronising signal and the key signal, thereby to cause undivided first and second sections of analogue information to emerge from the reading means.

15. An apparatus according to claim 14 wherein a combining means is provided for combining the section of digital information with the signal read out from the reading means to produce the unscrambled television signal.

16. An apparatus according to claim 15 wherein a second writing means is provided for writing the information blocks of the first section of analogue information into a third store and for writing the information blocks of the second section of analogue information into a fourth store, a second reading means is also provided for reading out the third and fourth stores, and directing means is provided to direct the first and second analogue information blocks to either the first writing means or the second writing means, and a second directing means is provided to direct the undivided section of analogue information from either the first reading means or the second reading means.

17. An apparatus according to claim 17 wherein the first and second directing means respond to the synchronising signal so that the first directing means directs the first and second sections of analogue information blocks of one set of alternate raster scan lines to the first writing means at the same time as the second directing means directs the undivided first and second sections of analogue information of the other set of alternate raster scan lines from the second reading means to the combining means.

18. An apparatus according to any one of the preceding claims wherein the first and second analogue sections are chrominance and luminance sections respectively of a multiplex analogue component (MAC) signal.

19. An apparatus according to any one of the preceding claims, wherein the first, second, third and fourth stores are in the form of charged coupled devices.

20. An apparatus according to any one of claims 1 to 19, wherein the first, second, third and fourth stores are in the form of digital memories.

| D | C | L |
|---|---|---|

FIG.1.

| D | C1 | L | C2 |
|---|----|---|----|

FIG.2a.

| D | C1 | L | C2 |
|---|----|---|----|

FIG.2b.

| D | L1 | C | L2 |
|---|----|---|----|

FIG.3a

| D | L1 | C | L2 |
|---|----|---|----|

FIG.3b

| D | L1 | C1 | L2 | C2 |
|---|----|----|----|----|

FIG.4a

| D | L1 | C1 | L2 | C2 |
|---|----|----|----|----|

FIG.4b

| D | C1 | L1 | C2 | L2 |
|---|----|----|----|----|

FIG.4c

| D | C1 | L1 | C2 | L2 |
|---|----|----|----|----|

FIG.4d

Fig.5.

Fig. 6.